# EUROPÄISCHE PATENTANMELDUNG

(11) **EP 1 202 543 A2**
(43) Veröffentlichungstag der Anmeldung: **02.05.2002**
(21) Anmeldenummer: 01122289.0
(22) Anmeldetag: 18.09.2001
(51) Int. Cl.: H04M 7/00

(54) **Verfahren und Router zur Einrichtung einer Verbindung über ein IP-orientiertes Netz**

(30) Priorität: 31.10.2000 DE 10053951
(71) Anmelder: SIEMENS AKTIENGESELLSCHAFT, 80333 München (DE)
(72) Erfinder: Lindemann, Werner, Dr., 45473 Mülheim (DE); Schönfeld, Norbert, 44145 Dortmund (DE)

(57) **Zusammenfassung**

Die vorliegende Erfindung betrifft ein Verfahren zur Einrichtung einer Kommunikationsverbindung über ein IP-orientiertes Netz (IPN) ausgehend von einer an einem lokalen Rechnernetz (LAN) angeschlossenen Einrichtung (DV1,...,DVn), wobei das lokale Rechnernetz (LAN) über eine Router-Einrichtung (R) mit einem Kommunikationsnetz (KN) verbunden ist, das wiederum über eine Vielzahl n von Umsetzungseinrichtungen (ISP1, ...,ISPn) mit dem IP-orientierten Netz (IPN) verbunden ist. Erfindungsgemäß ist in der Router-Einrichtung (R) eine Auswahleinheit (CCRS) implementierten, die anhand einer von der Einrichtung (DV1,...,DVn) übermittelten Information (I) eine der Umsetzungseinrichtungen (ISP1,...,ISPn) auswählt. Nachfolgend wird durch die Router-Einrichtung (R) daraufhin eine Verbindung mit der ausgewählten Umsetzungseinrichtung (ISP1,...,ISPn) über das Kommunikationsnetz (KN) aufgebaut.

## Beschreibung

Aufgrund einer zunehmenden globalen Ausrichtung von Unternehmen nimmt die Nutzung von Telekommunikationsdiensten zur Übermittlung von Sprache und Daten ständig zu. Dies hat zur Folge, daß die durch diese Telekommunikationsdienste verursachten Kosten ständig steigen und zu einem erheblichen Kostenfaktor für die Unternehmen werden, die Möglichkeiten zur Reduzierung dieser Kosten suchen.

Eine Möglichkeit Daten kostengünstig und weltweit übermitteln zu können, bieten globale Computernetzwerke, wie beispielsweise das 'Internet'. Aus dem Artikel von Michael Wagner: "Szenarien der Internet-Telefonie", NTZ, Heft 5, 1998, Seiten 48 - 49, ist es beispielsweise bekannt, eine Übermittlung von Sprachdaten zwischen zwei Kommunikationsteilnehmern über das Internet zu realisieren. Ein Verbindungsaufbau über das Internet erfolgt dabei mittels spezieller, einen Zugang zum Internet realisierender Einrichtungen, in der Literatur häufig als 'Interworking Units' oder 'Internet Service Provider' bezeichnet.

Zusätzlich zu globalen Computernetzwerken, wie dem Internet, verfügen Unternehmen häufig über unternehmens-interne Computernetzwerke, sogenannte LANs (Local Area Network), die über eine Router-Einrichtung mit einem herkömmlichen Kommunikationsnetz - z.B. einem ISDN-orientierten Netz - verbunden sind. Durch die Router-Einrichtung erfolgt dabei eine bidirektionale Umsetzung zwischen dem Übertragungsprotokoll des lokalen Computernetzwerks und dem Übertragungsprotokoll des Kommunikationsnetzes. Zusätzlich ist die Router-Einrichtung derart konfiguriert, daß bei einer Initialisierung einer Internet-Verbindung ausgehend von einer an das lokale Computernetzwerk angeschlossenen LAN-Einrichtung automatisch eine Kommunikationsverbindung - z.B. einem ISDN-Verbindung - über das Kommunikationsnetz zu einem in der Router-Einrichtung vorkonfigurierten 'Internet Service Provider' eingerichtet wird.

Ein Nachteil dieses Verfahrens besteht darin, daß im Gegensatz zu einer manuellen Einwahl in das Internet der 'Internet Service Provider' durch einen den Verbindungsaufbau initialisierenden Teilnehmer nicht verbindungsindividuell - in der Literatur häufig als 'call by call' bezeichnet - ausgewählt werden kann. Durch die Vorkonfiguration der Router-Einrichtung ist es nicht möglich, bestimmte temporäre verbindungsspezifische Umstände zu berücksichtigen. Solche verbindungsspezifischen Zustände sind beispielsweise:
- eine momentane Überlastung des vorkonfigurierten 'Internet Service Providers',
- die bei einem Verbindungsaufbau über einen bestimmten 'Internet Service Provider' anfallenden Kosten,
- eine bestimmte Qualitätsanforderung für die aktuelle Verbindung - in der Literatur häufig als 'Quality of Service' bezeichnet,
- eine bestimmte Sicherheitsanforderung für die aktuelle Verbindung,
- eine Vermeidung von speziellen Diensten, die ein 'Internet Service Provider' an einen Verbindungsaufbau knüpft, wie z.B. eine Vermeidung von Werbeeinblendungen für eine über diesen 'Internet Service Provider' eingerichtete Verbindung, oder
- die Nutzung spezieller Dienste bei einem 'Internet Service Provider'.

In Fällen, in denen ein 'Internet Service Provider' bei einem Verbindungsaufbau ausgehend von einer an das lokale Computernetzwerk angeschlossenen LAN-Einrichtung verbindungsindividuell - 'call by call' - ausgewählt werden soll, ist heute eine in den beteiligten Einrichtungen implementierte CAPI-Schnittstelle (Common Application Programming Interface) notwendig.

Sofern keine eigenständige Hardware für jede LAN-Einrichtung vorhanden ist, besteht zusätzlich die Notwendigkeit für eine sogenannte Client-Server-Architektur, wobei die in den LAN-Einrichtungen implementierten lokalen CAPI-Schnittstellen als 'CAPI-Client' und eine in der Router-Einrichtung implementierte zentrale CAPI-Schnittstelle als 'CAPI-Server' bezeichnet werden. Durch diese Client-Server-Architektur können jedoch router-spezifische Vorteile, wie beispielsweise eine gemeinsame Nutzung einer ISDN-Verbindung zu einem 'Internet Service Provider' durch mehrere LAN-Einrichtungen oder die Einrichtung einer gemeinsamen 'Firewall' nicht mehr genutzt werden. Zudem entsteht durch eine Abwicklung des CAPI-Protokolls im lokalen Computernetzwerk ein sogenannter Protokoll-Overhead, d.h. ein ungünstiges Verhältnis zwischen den zu übermittelnden Nutz- und Steuerinformationen, da die zu übermittelnden Nutzdaten zusätzlich zu einem im lokalen Computernetzwerk unterstützten Übertragungsprotokoll in das CAPI-Protokoll eingepackt werden müssen.

Der vorliegenden Erfindung liegt somit die Aufgabe zugrunde, ein Verfahren und eine Router-Einrichtung anzugeben, durch die eine verbindungs-individuelle Auswahl eines 'Internet Service Providers' ermöglicht wird.

Die Lösung dieser Aufgabe erfolgt erfindungsgemäß mit den Merkmalen des Patentanspruchs 1 bzw. 12.

Erfindungsgemäß wird die Aufgabe durch eine in der Router-Einrichtung implementierten Auswahleinheit gelöst. Durch die Router-Einrichtung wird anhand einer von einer LAN-Einrichtung übermittelten Information eine der zur Verfügung stehenden Umsetzungseinrichtungen, d.h. einer der vorhandenen 'Internet Service Provider', ausgewählt und nachfolgend eine Kommunikationsverbindung mit dem ausgewählten 'Internet Service Provider' über das Kommunikationsnetz aufgebaut.

Ein wesentlicher Vorteil des erfindungsgemäßen Verfahrens bzw. der erfindungsgemäßen Auswahleinheit für die Router-Einrichtung besteht darin, daß diese ohne großen Implementierungsaufwand in bereits bestehende Systeme integriert werden können.

Ein weiterer Vorteil der erfindungsgemäßen Auswahleinheit besteht darin, daß durch eine entsprechende Konfiguration der Auswahleinheit ein Aufbau einer Internet-Verbindung ausgehend von einer auf einer an das lokale Rechnernetz angeschlossenen LAN-Einrichtung ablaufenden Anwendung ohne die Verwendung einer CAPI-Schnittstelle realisiert werden kann, so daß die im Zusammenhang mit einer CAPI-orientierten Client-Server-Architektur oben beschriebenen Nachteile beim erfindungsgemäßen Verfahren nicht auftreten.

Vorteilhafte Weiterbildungen der Erfindung sind in den Unteransprüchen angegeben.

Gemäß einer Weiterbildung der Erfindung ist die Auswahleinheit als Server ausgestaltet, wobei die Information für den Aufbau einer Internet-Verbindung, d.h. eine Verbindung mit einer im IP-orientierten Netz angeordneten Einrichtung - wie z.B. einem Server oder einem Personal Computer - über einen speziellen 'Internet Service Provider' über eine separate Socket-Verbindung zwischen der entsprechenden LAN-Einrichtung und der Router-Einrichtung übermittelt wird. Hierfür ist eine separate auf einer beliebigen Einrichtung ablaufende Anwendung vorgesehen. Ein Vorteil der Weiterbildung besteht dabei unter anderem darin, daß diese Weiterbildung eine relativ einfach programmierbare Softwarelösung darstellt.

Gemäß einer weiteren Ausgestaltung der Erfindung ist die Auswahleinheit ähnlich einer DNS-Proxy-Einheit (Domain Name Service) realisiert. Hierbei wird zum einen auf einfache Weise eine hohe Flexibilität erreicht und zum anderen durch das Vorsehen nur einer Anwendung für die Initialisierung einer Internet-Verbindung und der Übermittlung der einen 'Internet Service Provider' identifizierenden Information eine hohe Bedienerfreundlichkeit erreicht.

Eine weitere Weiterbildung der Erfindung betrifft die Ausgestaltung des Auswahleinheit als IP-Adress-Filter, wodurch eine - im Gegensatz zur Ausgestaltung der Auswahleinheit ähnlich einer DNS-Proxy-Einheit - einfachere Realisierbarkeit erreicht wird.

Ein Ausführungsbeispiel der Erfindung wird im folgenden anhand der Zeichnung näher erläutert.

### Dabei zeigen:

- Fig. 1:: ein Strukturbild zur schematischen Darstellung der am erfindungsgemäßen Verfahren beteiligten wesentlichen Funktionseinheiten;
- Fig. 2:: ein Strukturbild zur schematischen Darstellung eines ersten Ausführungsbeispiels der Erfindung;
- Fig. 3:: ein Strukturbild zur schematischen Darstellung eines zweiten Ausführungsbeispiels der Erfindung; und
- Fig. 4:: ein Strukturbild zur schematischen Darstellung eines dritten Ausführungsbeispiels der Erfindung.

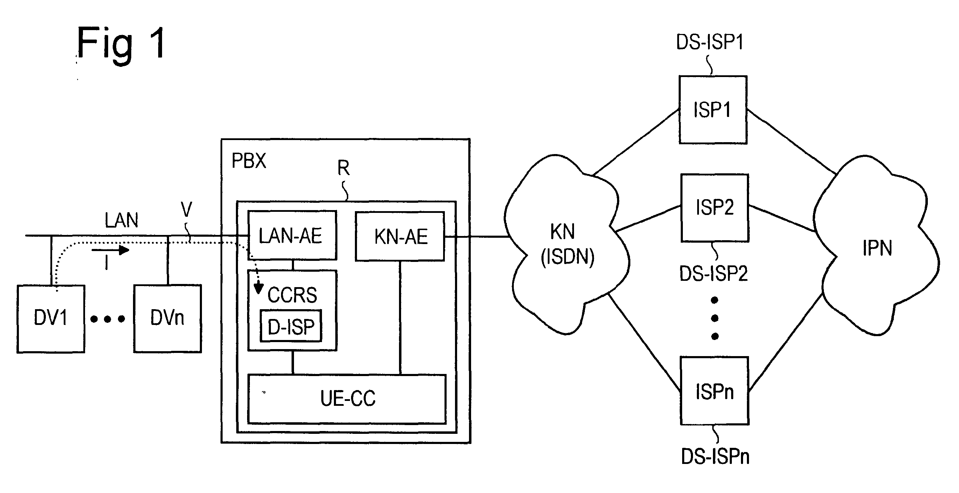

Fig. 1 zeigt eine schematische Darstellung einer Kommunikationsanlage PBX mit einer in der Kommunikationsanlage PBX angeordneten Router-Einrichtung R. Die Router-Einrichtung R ist über eine LAN-Anschlußeinheit LAN-AE mit einem lokalen Rechnernetz LAN (Local Area Network) und über eine Kommunikationsnetz-Anschlußeinheit KN-AE mit einem Kommunikationsnetz KN, beispielsweise einem ISDN-orientierten Kommunikationsnetz (durch das in Klammern gesetzte ISDN veranschaulicht), verbunden. Durch eine in der Router-Einrichtung R angeordnete Umwandlungs- und Steuereinheit UE-CC erfolgt dabei eine bidirektionale Umsetzung zwischen dem Übertragungsprotokoll des lokalen Rechnernetzes LAN und dem Übertragungsprotokoll des Kommunikationsnetzes KN. Alternativ kann die Router-Einrichtung R auch als eigenständige Einrichtung, d.h. nicht in einer Kommunikationsanlage PBX implementiert, realisiert werden.

Über das lokale Rechnernetz LAN sind Datenverarbeitungseinrichtungen DV1,...,DVn, beispielsweise Personal Computer oder sogenannte 'Workstations', mit der Kommunikationsanlage PBX verbunden. Das Kommunikationsnetz KN ist über eine Mehrzahl von Umsetzungseinrichtungen ISP1,..., ISPn - in der Literatur häufig als 'Internet Service Provider' bezeichnet - mit einem globalen IP-orientierten Netz IPN, beispielsweise dem Internet' verbunden. Für eine Adressierung der Umsetzungseinrichtungen ISP1,...,ISPn ist jeder Umsetzungseinrichtung ISP1, ...,ISPn ein die jeweilige Umsetzungseinrichtung ISP1,..., ISPn eindeutig kennzeichnender Datensatz DS-ISP1,...,DS-ISPn zugeordnet. Ein Datensatz DS-ISP1,...,DS-ISPn umfaßt dabei beispielsweise eine der jeweiligen Umsetzungseinrichtung ISP1,...,ISPn im Kommunikationsnetz KN zugeordnete Rufnummer, eine der Umsetzungseinrichtung ISP1,..., ISPn im IP-orientierten Netz IPN zugeordnete IP-Adresse, ein User-Paßwort, ein Username, usw.

Erfindungsgemäß ist in der Router-Einrichtung R eine mit der LAN-Anschlußeinheit LAN-AE und der Umwandlungs- und Steuereinheit UE-CC verbundene Auswahleinheit CCRS (CCRS: Call by Call Routing Support) angeordnet. In der Auswahleinheit CCRS ist eine eine sogenannte Default-Umsetzungseinrichtung identifizierende Information D-ISP hinterlegt, wobei die Router-Einrichtung R über die Default-Umsetzungseinrichtung aktuell eine Verbindung mit dem IP-orientierten Netz IPN aufbaut. Anhand einer von einer an das lokale Netzwerk LAN angeschlossenen Datenverarbeitungseinrichtung DV1,...,DVn - im vorliegenden Ausführungsbeispiel die erste Datenverarbeitungseinrichtung DV1 - an die Router-Einrichtung R übermittelten Information I kann eine der zur Verfügung stehenden Umsetzungseinrichtungen ISP1,...,ISPn ausgewählt und als neue Default-Umsetzungseinrichtung eingerichtet werden, so daß nachfolgend eine Verbindung mit dem IP-orientierten Netz IPN über die neu ausgewählte Umsetzungseinrichtung ISP1,..., ISPn eingerichtet wird.

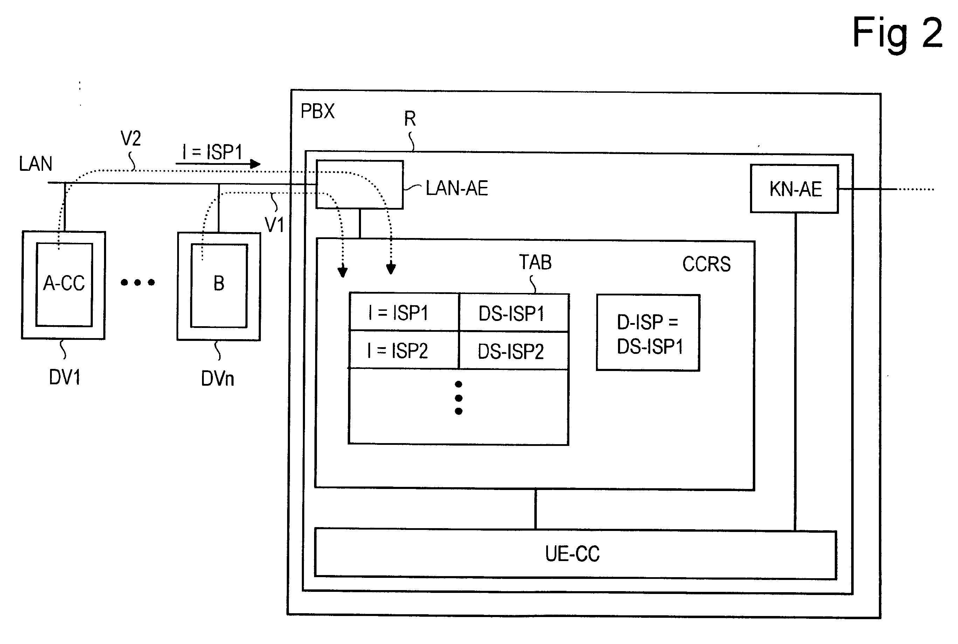

Fig. 2 zeigt ein Strukturbild zur schematischen Darstellung eines ersten Ausführungsbeispiels der Erfindung, bei der eine Übermittlung der Information I von einer separaten in einer Datenverarbeitungseinrichtung DV1,..., DVn ablaufenden Anwendung initialisiert und über eine separate IP-Verbindung übermittelt wird.

Gemäß dem ersten Ausführungsbeispiel laufen in der n-ten Datenverarbeitungseinrichtung DVn eine erste Anwendung B - beispielsweise ein sogenannter 'Web-Browser' - und in der ersten Datenverarbeitungseinrichtung DV1 eine zweite Anwendung A-CC ab. Die zweite Anwendung A-CC kann alternativ ebenfalls in der n-ten Datenverarbeitungseinrichtung DVn ablaufen, oder auch als eigenständige, an das lokale Netzwerk LAN, das Kommunikationsnetz KN oder das IP-orientierte Netz IPN angeschlossene Einrichtung realisiert werden.

Durch die zweite Anwendung A-CC wird eine separate IP-Verbindung V2 zwischen der zweiten Anwendung A-CC und der Auswahleinheit CCRS über das lokale Netzwerk LAN aufgebaut. Über die separate Verbindung V2 wird eine Information I zur Auswahl einer Umsetzungseinrichtung ISP1,..., ISPn an die Auswahleinheit CCRS übermittelt. Diese Information I kann durch einen Teilnehmer beispielsweise mittels einer von der zweiten Anwendung A-CC an einer Anzeigeeinrichtung der ersten Datenverarbeitungseinrichtung DV1 angezeigten Eingabemaske oder mittels eines angezeigten Auswahlmenüs eingegeben werden. Im vorliegenden Ausführungsbeispiel wurde durch einen Teilnehmer eine Information I = 'ISP1' eingegeben, die über die separate Verbindung V2 an die Auswahleinheit CCRS übermittelt wird. Die Information kann dabei ein tatsächlich vergebener Name einer Umsetzungseinrichtungen ISP1,..., ISPn aber auch ein entsprechender in der Router-Einrichtung R konfigurierter 'Pseudo-Name' sein, für den ein entsprechende Datensatz DS einer Umsetzungseinrichtung ISP1,..., ISPn in der Auswahleinheit CCRS hinterlegt ist.

Anhand einer in der Auswahleinheit CCRS gespeicherten Tabelle TAB erfolgt eine Auswahl einer Umsetzungseinrichtung ISP1, ...,ISPn anhand der von der ersten Datenverarbeitungseinrichtung DV1 übermittelten Information I = 'ISP1'. Hierfür sind in der Tabelle TAB die jeweiligen Umsetzungseinrichtungen ISP1,..., ISPn identifizierende Informationen I und den Informationen I zugeordnet, die den jeweiligen Umsetzungseinrichtungen ISP1,...,ISPn zugeordneten Datensätze DS-ISP1, DS-ISP2,... gespeichert. Im vorliegenden Ausführungsbeispiel ist der Information I = 'ISP1' der Datensatz DS-ISP1 zugeordnet. Durch den Datensatz DS-ISP1 ist die erste Umsetzungseinrichtung ISP1 eindeutig identifiziert, so daß die eine Default-Umsetzungseinrichtung identifizierende Information auf D-ISP = DS-ISP1 gesetzt wird.

In Fällen, in denen keine Information I von der zweiten Anwendung A-CC an die Auswahleinheit CCRS übermittelt wird, kann vorgesehen sein, daß die Auswahleinheit CCRS eigenständig eine Anfragenachricht an die zweite Anwendung A-CC sendet, durch welche eine Information I zur Auswahl einer Umsetzungseinrichtungen ISP1,...,ISPn als Default-Umsetzungseinrichtung angefordert wird. Alternativ kann die Auswahleinheit CCRS derart konfiguriert sein, daß die Default-Umsetzungseinrichtung - analog zu einer sogenannten 'Least Cost Routing Einrichtung' tageszeitabhängig automatisch umkonfiguriert wird.

Durch die erste Anwendung B wird - beispielsweise beim Starten der Anwendung - eine Internet-Verbindung, d.h. eine Kommunikationsverbindung mit einer im IP-orientierten Netz IPN angeordneten Einrichtung, initialisiert. Hierzu wird durch die erste Anwendung B eine Verbindung V1 zwischen der ersten Anwendung B und der Auswahleinheit CCRS der Router-Einrichtung R über das lokale Netzwerk LAN aufgebaut. Durch die Umwandlungs- und Steuereinheit UE-CC der Router-Einrichtung R wird daraufhin mittels der die Default-Umsetzungseinrichtung identifizierende Information D-ISP = DS-ISP1 eine Kommunikationsverbindung mit der ersten Umsetzungseinrichtung ISP1 über das Kommunikationsnetz KN eingerichtet. Somit wird die durch die n-te Datenverarbeitungseinrichtung DVn initialisierte Internet-Verbindung über die erste Umsetzungseinrichtung ISP1 eingerichtet.

Gemäß einer ersten Alternative des ersten Ausführungsbeispiels werden ab diesem Zeitpunkt alle Zugriffe der ersten Datenverarbeitungseinrichtung DV1 auf im IP-orientierten Netz IPN angeordneten Einrichtungen über die erste Umsetzungseinrichtung ISP1 geführt. Hat bereits eine ältere - nicht mehr benötigte - Verbindung zwischen der ersten Datenverarbeitungseinrichtung DV1 und dem IP-orientierten Netz IPN bestanden, wird diese nach Ablauf einer konfigurierbaren Zeitspanne automatisch abgebaut - in der Literatur häufig als 'short-hold-Mechanismus' bezeichnet. Ein Abbau der älteren Verbindung unterbleibt jedoch, wenn diese Verbindung von einer weiteren, an das lokale Netzwerk LAN angeschlossenen Einrichtung weiter verwendet wird, d.h. die Default-Umsetzungseinrichtung kann einrichtungs-individuell festgelegt werden.

Gemäß einer zweiten Alternative des ersten Ausführungsbeispiels werden ab diesem Zeitpunkt alle Zugriffe der an das lokale Netzwerk LAN angeschlossenen Datenverarbeitungseinrichtung DV1,...,DVn auf im IP-orientierten Netz IPN angeordneten Einrichtungen über die erste Umsetzungseinrichtung ISP1 geführt, d.h. die Default-Umsetzungseinrichtung wird netzwerkweit festgelgt.

Ein Nachteil des ersten Ausführungsbeispiels besteht darin, daß zusätzlich zur ersten Anwendung B eine separate zweite Anwendung A-CC benötigt wird, wodurch die Bedienerfreundlichkeit dieser Ausgestaltung der Erfindung eher gering ist.

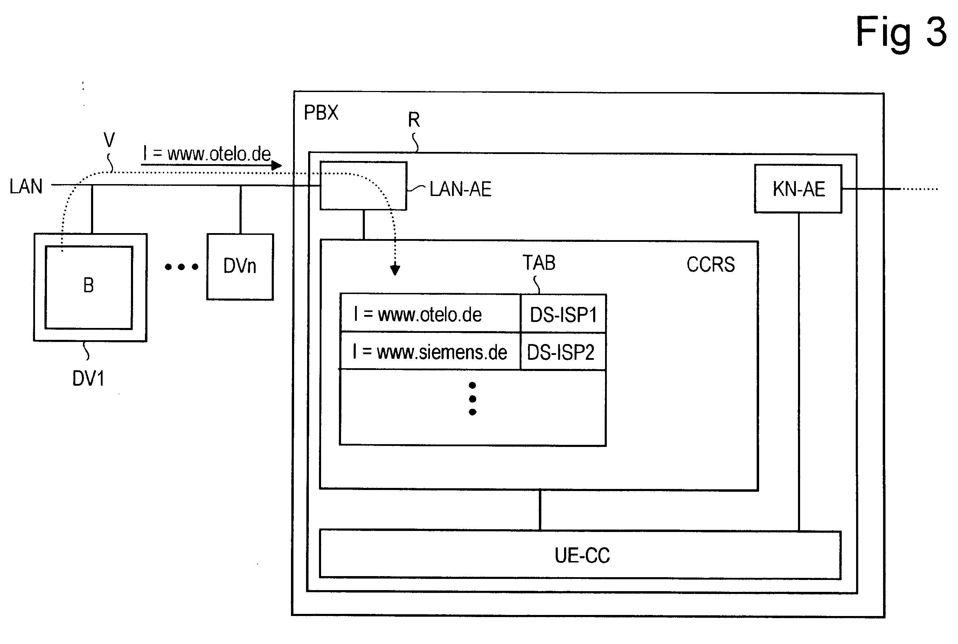

Fig. 3 zeigt ein Strukturbild zur schematischen Darstellung eines zweiten Ausführungsbeispiels der Erfindung, bei der die Auswahleinheit CCRS ähnlich einem 'DNS-Proxy' (Domain Name Service) ausgestaltet ist. Durch den 'Domain Name Service', kurz DNS, werden sogenannte Internet-Namen - wie beispielsweise "www.siemens.de" - zur Verfügung gestellt, die sich ein Teilnehmer leichter einprägen und merken kann, als eine herkömmliche, aus einer Kombination von Ziffern bestehenden IP-Adresse - beispielsweise 199.199.199.7. Das sogenannte DNS-Protokoll dient dabei einer unidirektionalen Umwandlung eines Internet-Namens in eine IP-Adresse.

Die in der Auswahleinheit CCRS der Router-Einrichtung R hinterlegte, gemäß dem zweiten Ausführungsbeispiel ausgestaltete Tabelle TAB enthält somit - anstelle der Namens-Informationen gemäß dem ersten Ausführungsbeispiel - den einzelnen Umsetzungseinrichtungen ISP1,..., ISPn zugeordnete Internet-Namen. So ist der ersten Umsetzungseinrichtung ISP1 ein Internet-Name "www.otelo.de" und der zweiten Umsetzungseinrichtung ISP2 ein Internet-Name "www.siemens.de" zugeordnet. Den Informationen I - in Form von Internet-Namen - sind jeweils die die entsprechenden Umsetzungseinrichtungen ISP1,...,ISPn identifizierenden Datensätze DS-ISP1,DS-ISP2,... zugeordnet gespeichert.

Analog zum ersten Ausführungsbeispiel wird durch eine in der ersten Datenverarbeitungseinrichtung DV1 ablaufenden Anwendung B - beispielsweise einen sogenannten 'Web-Browser' - eine Internet-Verbindung, d.h. eine Kommunikationsverbindung mit einer im IP-orientierten Netz IPN angeordneten Einrichtung, initialisiert. Dies erfolgt in der Regel beim Starten der Anwendung B. Hierbei wird durch die Anwendung B im Rahmen der Verbindung eine Information I in Form eines Internet-Namens von der Anwendung B an die Auswahleinheit CCRS übermittelt - in der Literatur in diesem Zusammenhang häufig als 'DNS-Anfrage' bezeichnet. Im vorliegenden Ausführungsbeispiel wird eine Information I = 'www.otelo.de' von der Anwendung B an die Auswahleinheit CCRS übermittelt.

Die Information I kann dabei wie im vorliegenden Ausführungsbeispiel ein beliebiger Name einer 'Homepage' eines 'Internet Service Providers' - z.B. 'www.otelo.de' - sein, aber auch ein in der Router-Einrichtung R entsprechend konfigurierter 'Pseudo-Name' - z.B. 'ISP1'. Im Fall von 'Pseudo-Namen' kann dabei eine eigene interne IP-Adresse zurückgeliefert werden. Diese Adresse dient im weiteren zur Darstellung von entsprechenden Quittungsmeldungen.

Anhand der in der Auswahleinheit CCRS gespeicherten Tabelle TAB erfolgt eine Auswahl einer Umsetzungseinrichtung ISP1, ...,ISPn anhand der von der ersten Datenverarbeitungseinrichtung DV1 übermittelten Information I = 'www.otelo.de'. Im vorliegenden Ausführungsbeispiel ist der Information I = 'www.otelo.de' der Datensatz DS-ISP1 zugeordnet. Durch den Datensatz DS-ISP1 ist die erste Umsetzungseinrichtung ISP1 eindeutig identifiziert, so daß die DNS-Anfrage durch die Umwandlungs- und Steuereinheit UE-CC der Router-Einrichtung R an die erste Umsetzungseinrichtung ISP1 über das Kommunikationsnetz KN weitergeleitet wird. Die DNS-Anfrage wird daraufhin durch die erste Umsetzungseinrichtung ISP1 in entsprechender Weise beantwortet.

Ein Vorteil des zweiten Ausführungsbeispiels liegt in einer höheren Flexibilität und einer höheren Bedienerfreundlichkeit gegenüber dem ersten Ausführungsbeispiel.

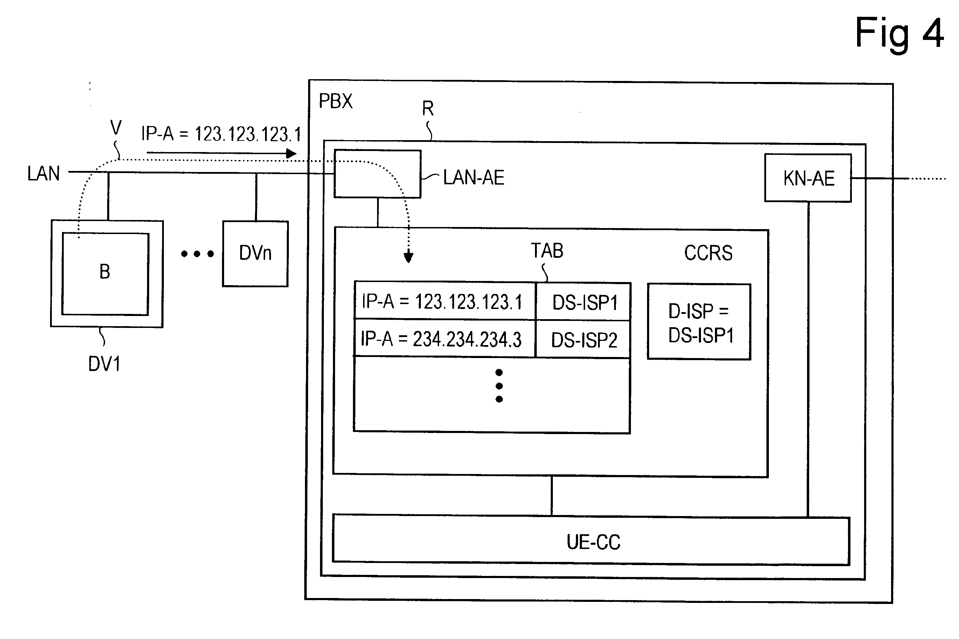

Fig. 4 zeigt ein Strukturbild zur schematischen Darstellung eines dritten Ausführungsbeispiels der Erfindung, bei der die Auswahleinheit CCRS als sogenannter 'IP-Adress-Filter' ausgestaltet ist. Die in der Auswahleinheit CCRS der Router-Einrichtung R hinterlegte, gemäß dem dritten Ausführungsbeispiel ausgestaltete Tabelle TAB enthält dabei eine Liste von IP-Adressen IP-A und den IP-Adressen IP-A zugeordnet die jeweiligen Umsetzungseinrichtungen ISP1,...,ISPn identifizierenden Datensätze DS-ISP1, DS-ISP2. Bei einem Empfang einer in der Tabelle TAB hinterlegten IP-Adresse IP-A wird die Default-Umsetzungseinrichtung neu festgelegt, d.h. die die Default-Umsetzungseinrichtung identifizierende Information D-ISP wird mit dem durch die IP-Adresse IP-A identifizierten Datensatz DS neu belegt.

Alternativ kann auch vorgesehen sein, daß lediglich für die entsprechende Datenverarbeitungseinrichtung DV1,..., DVn ein Kommunikations-Verbindungsaufbau zwischen der Router-Einrichtung R und einer neuen, durch die IP-Adresse identifizierten Umsetzungseinrichtung ISP1,..., ISPn initialisiert wird.

Analog zum zweiten Ausführungsbeispiel wird durch eine in der ersten Datenverarbeitungseinrichtung DV1 ablaufenden Anwendung B - beispielsweise einen sogenannter 'Web-Browser' - eine Internet-Verbindung, d.h. eine Kommunikationsverbindung mit einer im IP-orientierten Netz IPN angeordneten Einrichtung, initialisiert. Dies erfolgt in der Regel beim Starten der Anwendung B oder auch im Verlauf der Anwendungsbenutzung. Hierbei wird durch die Anwendung B eine Information I an die Auswahleinheit CCRS übermittelt. Im vorliegenden Ausführungsbeispiel wird als Information I eine IP-Adresse IP-A = 123.123.123.1 von der Anwendung B an die Auswahleinheit CCRS übermittelt.

Anhand der in der Auswahleinheit CCRS gespeicherten Tabelle TAB, in der diejenigen IP-Adressen IP-A gespeichert sind, bei deren Anwahl die Default-Umsetzungseinrichtung neu eingerichtet wird, erkennt die Router-Einrichtung R, ob eine Kommunikationsverbindung mit einer neuen Umwandlungseinrichtung ISP1,...,ISPn initialisiert werden soll oder nicht. Im vorliegenden Ausführungsbeispiel wird als Information I die IP-Adresse IP-A = 123.123.123.1 an die Auswahleinheit CCRS übermittelt, wodurch die Auswahleinheit CCRS die Default-Umsetzungseinrichtung identifizierende Information mit D-ISP = DS-ISP1 neu belegt. Eine nachfolgende Datenübermittlung über das IP-orientierte Netz IPN ausgehend einer an das lokale Netzwerk LAN angeschlossenen Datenverarbeitungseinrichtung DV1,...,DVn wird somit über die erste Umsetzungseinrichtung ISP1 geführt. Die erste Umsetzungseinrichtung ISP1 wird dabei solange als Default-Umsetzungseinrichtung verwendet, bis durch eine der Datenverarbeitungseinrichtungen DV1,..., DVn eine neue, ebenfalls in der Tabelle TAB gespeicherte IP-Adresse IP-A an die Router-Einrichtung R übermittelt wird. Das Verfahren kann wiederum einrichtungs-individuell aber auch netzwerkweit realisiert werden.

Beim dritten Ausführungsbeispiel existiert somit keine direkte Zuordnung zwischen einer Internet-Adresse IP-A und einer Umsetzungseinrichtung ISP1,...,ISPn, sondern lediglich eine Zuordnung bestimmter IP-Adressen IP-A für einen Übergang zu einer anderen Umsetzungseinrichtung ISP1,..., ISPn. Das dritte Ausführungsbeispiel stellt dabei eine gegenüber dem zweiten Ausführungsbeispiel einfachere Realisierung des erfindungsgemäßen Verfahrens dar.

## Patentansprüche

1. Verfahren zur Einrichtung einer Verbindung über ein IP-orientiertes Netz (IPN) ausgehend von einer an einem lokalen Rechnernetz (LAN) angeschlossenen Einrichtung (DV1,...,DVn), wobei das lokale Rechnernetz (LAN) über eine Router-Einrichtung (R) mit einem Kommunikationsnetz (KN) verbunden ist, das wiederum über eine Vielzahl n von Umsetzungseinrichtungen (ISP1, ..., ISPn) mit dem IP-orientierten Netz (IPN) verbunden ist,
bei dem anhand einer in der Router-Einrichtung (R) implementierten Auswahleinheit (CCRS) anhand einer von einer beliebigen Einrichtung (DV1,...,DVn) übermittelten Information (I) eine der Umsetzungseinrichtungen (ISP1,...,ISPn) ausgewählt wird, und
bei dem nachfolgend eine Kommunikationsverbindung mit der ausgewählten Umsetzungseinrichtung (ISP1,..., ISPn) über das Kommunikationsnetz (KN) aufgebaut wird.

2. Verfahren nach Anspruch 1,
**dadurch gekennzeichnet,**
**daß** die ausgewählte Umsetzungseinrichtung (ISP1,..., ISPn) als Default-Umsetzungseinrichtung konfiguriert wird, wobei eine Kommunikationsverbindung in den Fällen über die Default-Umsetzungseinrichtung eingerichtet wird, in denen keine gegenteilige Information (I) an der Auswahleinheit (CCRS) empfangen wird.

3. Verfahren nach Anspruch 1 oder 2,
**dadurch gekennzeichnet,**
**daß** ein Verbindungsaufbau ausgehend von einer ersten, auf der Einrichtung (DV1,...,DVn) ablaufenden Anwendung (B) initialisiert wird, und
**daß** die Information (I) ausgehend von einer zweiten, auf einer beliebigen Einrichtung (DV1,..., DVn) ablaufenden Anwendung (A-CC) an die Router-Einrichtung (R) übermittelt wird.

4. Verfahren nach Anspruch 3,
**dadurch gekennzeichnet,**
**daß** die Information (I) über eine separate Verbindung (V2) über das lokale Rechnernetz (LAN) übermittelt wird.

5. Verfahren nach einem der Ansprüche 1 bis 4,
**dadurch gekennzeichnet,**
**daß** in Fällen, in denen an der Auswahleinheit (CCRS) keine Information (I) empfangen wird, die Auswahleinheit (CCRS) automatisch eine Anforderungsmeldung an die die Information (I) übermittelnde Einrichtung (DV1,..., DVn) sendet.

6. Verfahren nach einem der Ansprüche 2 bis 4,
**dadurch gekennzeichnet,**
**daß** die Default-Umsetzungseinrichtung durch die Auswahleinheit (CCRS) tageszeitabhängig konfiguriert wird.

7. Verfahren nach einem der vorhergehenden Ansprüche,
**dadurch gekennzeichnet,**
**daß** in Fällen, in denen eine Kommunikationsverbindung zwischen der Einrichtung (DV1,..., DVn) und einer Umsetzungseinrichtung (ISP1,..., ISPn) neu aufgebaut wird, eine bereits bestehende Kommunikationsverbindung zwischen der Einrichtung (DV1,...,DVn) und einer anderen Umsetzungseinrichtung (ISP1,...,ISPn) nach Ablauf einer einstellbaren Zeitspanne automatisch abgebaut wird.

8. Verfahren nach Anspruch 7,
**dadurch gekennzeichnet,**
**daß** die bereits bestehende Kommunikationsverbindung in den Fällen nicht abgebaut wird, in denen eine andere an das lokale Rechnernetz (LAN) angeschlossene Einrichtung (DV1,...,DVn) weiter auf diese Kommunikationsverbindung zugreift.

9. Verfahren nach Anspruch 1 oder 2,
**dadurch gekennzeichnet,**
**daß** die Auswahleinheit (CCRS) gemäß einem DNS-Proxy (Domain Name Service) ausgestaltet ist, wobei eine von der Einrichtung (DV1,..., DVn) an die Auswahleinheit (CCRS) übermittelte DNS-Anfrage dahingehend überprüft wird, ob ein der DNS-Anfrage entsprechender, eine Umsetzungseinrichtung (ISP1,...,ISPn) identifizierender Internet-Name in der Auswahleinheit (CCRS) gespeichert ist, und wenn dies der Fall ist, die DNS-Anfrage zu der durch den Internet-Namen identifizierten Umsetzungseinrichtung (ISP1,...,ISPn) über das Kommunikationsnetz (KN) weitergeleitet wird.

10. Verfahren nach Anspruch 2,
**dadurch gekennzeichnet,**
**daß** die übermittelte Information (I) eine IP-Adresse (Internet Protocol) ist, und
**daß** bei der Übermittlung einer in der Auswahleinheit (CCRS) speziell eingerichteten, eine Umsetzungseinrichtung (ISP1, ..., ISPn) kennzeichnenden IP-Adresse die entsprechende Umsetzungseinrichtung (ISP1,..., ISPn) als Default-Umsetzungseinrichtung neu konfiguriert wird.

11. Verfahren nach Anspruch 10,
**dadurch gekennzeichnet,**
**daß** nachfolgend von einer Einrichtung (DV1,...,DVn) an die Router-Einrichtung (R) übermittelte IP-Adressen über die aktuell eingerichtete Default-Umsetzungseinrichtung geführt werden, bis eine neue, in der Auswahleinheit (CCRS) speziell eingerichtete IP-Adresse an die Router-Einrichtung (R) übermittelt wird.

12. Router-Einrichtung (R) zur Einrichtung einer Kommunikationsverbindung über ein IP-orientiertes Netz (IPN) ausgehend von einer an einem lokalen Rechnernetz (LAN) angeschlossenen Einrichtung (DV1, ...,DVn), wobei das lokale Rechnernetz (LAN) über die Router-Einrichtung (R) mit einem Kommunikationsnetz (KN) verbunden ist, das wiederum über eine Vielzahl n von Umsetzungseinrichtungen (ISP1, ...,ISPn) mit dem IP-orientierten Netz (IPN) verbunden ist,
mit einer Auswahleinheit (CCRS) zur Auswahl einer der Umsetzungseinrichtungen (ISP1,..., ISPn) anhand einer von einer beliebigen Einrichtung (DV1,..., DVn) übermittelten Information (I), und
mit einer Steuereinheit (UE-CC) zum nachfolgenden Aufbau einer Kommunikationsverbindung mit der ausgewählten Umsetzungseinrichtung (ISP1,...,ISPn) über das Kommunikationsnetz (KN).

13. Router-Einrichtung (R) nach Anspruch 12,
**dadurch gekennzeichnet,**
**daß** die Auswahleinheit (CCRS) als Server ausgestaltet ist, wobei für die Übermittlung der Information (I) eine separate Socket-Verbindung zwischen der Einrichtung (DV1,...DVn) und der Auswahleinheit (CCRS) eingerichtet ist.

14. Router-Einrichtung (R) nach Anspruch 12,
**dadurch gekennzeichnet,**
**daß** die Auswahleinheit (CCRS) gemäß einem DNS-Proxy (Domain Name Service) ausgestaltet ist.

15. Router-Einrichtung (R) nach Anspruch 12,
**dadurch gekennzeichnet,**
**daß** die Auswahleinheit (CCRS) als IP-Adress-Filter (Internet Protocol) ausgestaltet ist
